# EUROPEAN PATENT APPLICATION

(11) **EP 4 622 207 A1**
(43) Date of publication of application: **24.09.2025**
(21) Application number: 23902233.8
(22) Date of filing: 25.09.2023
(51) Int. Cl.: H04L 43/08

(54) **PRESSURE TESTING METHOD AND APPARATUS, AND RELATED DEVICE**

(30) Priority: 16.12.2022 CN 202211625721
(71) Applicant: Huawei Cloud Computing Technologies Co., Ltd., Guiyang, Guizhou 550025 (CN)
(72) Inventor: ZOU, Junfeng, Guiyang, Guizhou 550025 (CN); LIN, Jiadong, Guiyang, Guizhou 550025 (CN); ZHANG, Sen, Guiyang, Guizhou 550025 (CN)
(74) Representative: Goddar, Heinz J.
(86) International application number: PCT/CN2023/120937
(87) International publication number: WO 2024/125028

(57) **Abstract**

This application provides a stress testing method, including: obtaining traffic information of a to-be-tested object, where the to-be-tested object may be, for example, an object such as an application or a cloud service; generating, based on the traffic information of the to-be-tested object, a stress model matching a stress target, where the stress model includes at least one group of API request sequences, each group of API request sequences include at least one API request, and the stress target indicates an upper limit of stress that the to-be-tested object is capable of bearing; and then performing stress testing on the to-be-tested object based on the stress model. In this way, a technical level requirement for a test person can be reduced by automatically generating the stress model. In addition, the automatically generated stress model matches the stress target, so that a performance result obtained by performing stress testing by using the stress model is basically the same as actual performance of the to-be-tested object, thereby improving accuracy of stress testing. In addition, this application further provides a corresponding apparatus and a related device.

## Description

This application claims priority to Chinese Patent Application No. 202211625721.2, filed with the China National Intellectual Property Administration on December 16, 2022 and entitled "STRESS TESTING METHOD AND APPARATUS, AND RELATED DEVICE", which is incorporated herein by reference in its entirety.

### TECHNICAL FIELD

This application relates to the field of internet technologies, and in particular, to a stress testing method and apparatus, and a related device.

### BACKGROUND

With the development of a microservice architecture and the rise of a service mesh (service mesh) architecture, stress testing is usually performed on products such as applications or cloud services before the products are launched, to improve stability and running performance of the objects based on stress testing results. For example, a cloud service vendor may perform stress testing or the like on a product based on a performance testing service (performance testing service, PTS) or a cloud performance test service (cloud performance test service, CPTS).

Currently, during stress testing, a test person usually needs to manually construct a stress model based on understanding of service logic of a product, and use the stress model to perform a stress testing process. However, this requires the test person to have a high technical level, and subjectivity and cognitive limitations of the test person may cause a performance test result obtained by performing stress testing by using the stress model manually constructed by the test person to be greatly different from actual performance of the tested product, affecting accuracy of stress testing of the tested product.

### SUMMARY

In view of this, embodiments of this application provide a stress testing method, to improve stress testing effect for a target object. This application further provides a corresponding apparatus, a computing device cluster, a computer-readable storage medium, and a computer program product.

According to a first aspect, this application provides a stress testing method. Specifically, traffic information of a to-be-tested object is obtained, where the to-be-tested object may be, for example, an object such as an application, a cloud service, a system, a device, or a component. A stress model matching a stress target is generated based on the traffic information of the to-be-tested object, where the stress model includes at least one group of API request sequences, each group of API request sequences include at least one API request, and the stress target indicates an upper limit of stress that the to-be-tested object is capable of bearing, for example, indicates an upper limit of stress of the to-be-tested object in terms of CPU usage, occupied bandwidth, and the like. Then, stress testing is performed on the to-be-tested object based on the stress model.

In this way, the stress model can be automatically generated based on the traffic information of the to-be-tested object, and does not need to be manually generated by a test person based on understanding of service logic by the test person, thereby effectively reducing a technical level requirement for the test person. In addition, the automatically generated stress model matches the stress target, that is, test stress that can be generated by the automatically generated stress model can accord with stress corresponding to the stress target. In this way, a performance result obtained by performing stress testing by using the stress model is basically the same as actual performance of the to-be-tested object, so that impact of subjectivity and cognitive limitations of the test person on stress testing can be eliminated, thereby effectively improving accuracy of stress testing on the to-be-tested object.

In a possible implementation, when the stress model matching the stress target is generated, specifically, an initial stress model may be first generated based on the traffic information of the to-be-tested object, where the initial stress model includes at least one group of API request sequences, and each group of API request sequences in the initial stress model include at least one API request. Then, an API request sequence in the initial stress model (for example, an order of API request sequences is adjusted) or a parameter in an API request is mutated, to generate a plurality of stress models. Finally, a stress model in which a matching degree between generated test stress and the stress target is greater than a threshold is selected from the generated plurality of stress models. In this way, one or more stress models matching the stress target may be automatically generated, so that accuracy of stress testing on the to-be-tested object may be improved after stress testing is performed by using the stress model.

In a possible implementation, when the stress model matching the stress target is generated, specifically, the at least one group of API request sequences may be first extracted from the traffic information of the to-be-tested object, and an attribute of at least one service scenario is determined based on the at least one group of API request sequences. A configuration window is generated, where the configuration window presents the attribute of the at least one service scenario to a user. Then, the at least one group of API request sequences are adjusted based on a configuration operation that is performed by the user on the configuration window for the attribute of the at least one service scenario, to obtain the stress model matching the stress target. In this way, one or more stress models matching the stress target may be automatically generated, so that accuracy of stress testing on the to-be-tested object may be improved after stress testing is performed by using the stress model.

Optionally, when the stress model matching the stress target is generated, alternatively, the at least one group of API request sequences may be first extracted from the traffic information of the to-be-tested object, and an attribute of at least one service scenario is determined based on the at least one group of API request sequences. A configuration window is generated, where the configuration window presents the attribute of the at least one service scenario to a user. Then, the at least one group of API request sequences are adjusted based on a configuration operation that is performed by the user on the configuration window for the attribute of the at least one service scenario, to obtain an initial stress model. Then, an API request sequence in the initial stress model (for example, an order of API request sequences is adjusted) or a parameter in an API request is mutated, to generate a plurality of stress models. Finally, a stress model in which a matching degree between generated test stress and the stress target is greater than a threshold is selected from the generated plurality of stress models.

In a possible implementation, the attribute of the service scenario includes one or more pieces of the following information: an abnormal peak value of at least one indicator that belongs to the service scenario, a proportion of an API request that belongs to the service scenario in all API requests in a unit time, a proportion of an API request sequence that belongs to the service scenario in all API request sequences, a call rule of the API request that belongs to the service scenario, a cycle of the API request that belongs to the service scenario, and an execution mode of the API request that belongs to the service scenario.

In a possible implementation, before the attribute of the at least one service scenario is determined based on the API request sequences, the traffic information of the to-be-tested object may be analyzed to obtain an API request included in each of the at least one service scenario, and an attribute of each service scenario is obtained through calculation based on the API request included in each service scenario. This may facilitate subsequent determining of the attribute of the service scenario based on the API request sequences, thereby improving processing efficiency.

In a possible implementation, when the API request sequence in the initial stress model or the parameter in the API request is mutated, specifically, the API request sequence in the initial stress model or the parameter in the API request may be mutated by using a genetic algorithm or a deep reinforcement learning algorithm.

In actual application, the initial stress model may alternatively be mutated by using another algorithm or in another manner.

In a possible implementation, the stress target includes a plurality of types of sub-targets, for example, includes a plurality of types of sub-targets such as CPU usage and occupied bandwidth. In addition, different types of sub-targets indicate upper limits of different types of stress that the to-be-tested object is capable of bearing. In this way, based on a test requirement in actual application, a corresponding sub-target combination may be selected to generate a stress model, to implement stress testing in a plurality of dimensions of the to-be-tested object.

In a possible implementation, when the traffic information of the to-be-tested object is obtained, specifically, the traffic information of the to-be-tested object may be extracted from a log file of the to-be-tested object, or the traffic information of the to-be-tested object may be collected by using a traffic probe, where the traffic probe is deployed in a running environment of the to-be-tested object.

According to a second aspect, this application provides a stress testing apparatus. The apparatus includes: a traffic collection module, configured to obtain traffic information of a to-be-tested object; a model generation module, configured to generate, based on the traffic information of the to-be-tested object, a stress model matching a stress target, where the stress model includes at least one group of application programming interface API request sequences, each group of API request sequences include at least one API request, and the stress target indicates an upper limit of stress that the to-be-tested object is capable of bearing; and a stress testing module, configured to perform stress testing on the to-be-tested object based on the stress model.

In a possible implementation, the model generation module is configured to: generate an initial stress model based on the traffic information of the to-be-tested object, where the initial stress model includes at least one group of API request sequences, and each group of API request sequences in the initial stress model include at least one API request; mutate an API request sequence in the initial stress model or a parameter in an API request, to generate a plurality of stress models; and select, from the plurality of stress models, a stress model in which a matching degree between generated test stress and the stress target is greater than a threshold.

In a possible implementation, the model generation module is configured to: extract the at least one group of API request sequences from the traffic information of the to-be-tested object; determine an attribute of at least one service scenario based on the at least one group of API request sequences; generate a configuration window, where the configuration window presents the attribute of the at least one service scenario to a user; and adjust the at least one group of API request sequences based on a configuration operation that is performed by the user on the configuration window for the attribute of the at least one service scenario, to obtain the stress model matching the stress target.

In a possible implementation, the attribute of the service scenario includes one or more pieces of the following information: an abnormal peak value of at least one indicator that belongs to the service scenario, a proportion of an API request that belongs to the service scenario in all API requests in a unit time, a proportion of an API request sequence that belongs to the service scenario in all API request sequences, a call rule of the API request that belongs to the service scenario, a cycle of the API request that belongs to the service scenario, and an execution mode of the API request that belongs to the service scenario.

In a possible implementation, the model generation module is further configured to: analyze the traffic information of the to-be-tested object, to obtain an API request included in each of the at least one service scenario; and obtain an attribute of each service scenario through calculation based on the API request included in each service scenario.

In a possible implementation, the model generation module is configured to mutate the API request sequence in the initial stress model or the parameter in the API request by using a genetic algorithm or a deep reinforcement learning algorithm.

In a possible implementation, the stress target includes a plurality of types of sub-targets, and different types of sub-targets indicate upper limits of different types of stress that the to-be-tested object is capable of bearing.

In a possible implementation, the traffic collection module is configured to: extract the traffic information of the to-be-tested object from a log file of the to-be-tested object; or collect the traffic information of the to-be-tested object by using a traffic probe, where the traffic probe is deployed in a running environment of the to-be-tested object.

Further, the stress testing apparatus may further include an evaluation module, configured to analyze and evaluate a result obtained through stress testing, and generate an evaluation report.

It should be noted that the stress testing apparatus provided in the second aspect corresponds to the stress testing method provided in the first aspect. Therefore, for technical effects of the second aspect and any one of the implementations of the second aspect, refer to technical effects of the first aspect or a corresponding implementation of the first aspect.

According to a third aspect, this application provides a computing device cluster. The computing device includes at least one computing device, and the at least one computing device includes at least one processor and at least one storage. The at least one storage is configured to store instructions, and the at least one processor executes the instructions stored in the at least one storage, so that the computing device cluster performs the stress testing method according to any one of the first aspect or the possible implementations of the first aspect. It should be noted that the storage may be integrated into the processor, or may be independent of the processor. The at least one computing device may further include a bus. The processor is connected to the storage through the bus. The storage may include a readable storage and a random access memory.

According to a fourth aspect, this application provides a computer-readable storage medium. The computer-readable storage medium stores instructions. When the instructions are run on at least one computing device, the at least one computing device is enabled to perform the stress testing method according to any one of the first aspect or the implementations of the first aspect.

According to a fifth aspect, this application provides a computer program product including instructions. When the computer program product is run on at least one computing device, the at least one computing device is enabled to perform the stress testing method according to any one of the first aspect or the implementations of the first aspect.

Based on the implementations provided in the foregoing aspects, this application may further provide more implementations through further combination.

### BRIEF DESCRIPTION OF DRAWINGS

To describe technical solutions in embodiments of this application more clearly, the following briefly describes accompanying drawings used for describing embodiments. It is clear that the accompanying drawings in the following descriptions are merely some embodiments recorded in this application, and for a person of ordinary skill in the art, other drawings may also be derived from the accompanying drawings.
FIG. 1 is a diagram of a structure of an example stress testing apparatus according to this application;
FIG. 2 is a schematic flowchart of a stress testing method according to this application;
FIG. 3 is a diagram of a plurality of API requests in a time period from t1 to t11;
FIG. 4 is a topology diagram of a stress model according to this application;
FIG. 5 is a diagram of a process of mutating a stress model according to this application;
FIG. 6 is a diagram of a structure of a computing device according to this application; and
FIG. 7 is a diagram of a structure of a computing device cluster according to this application.

### DESCRIPTION OF EMBODIMENTS

The following describes solutions in embodiments of this application with reference to accompanying drawings in this application.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application.

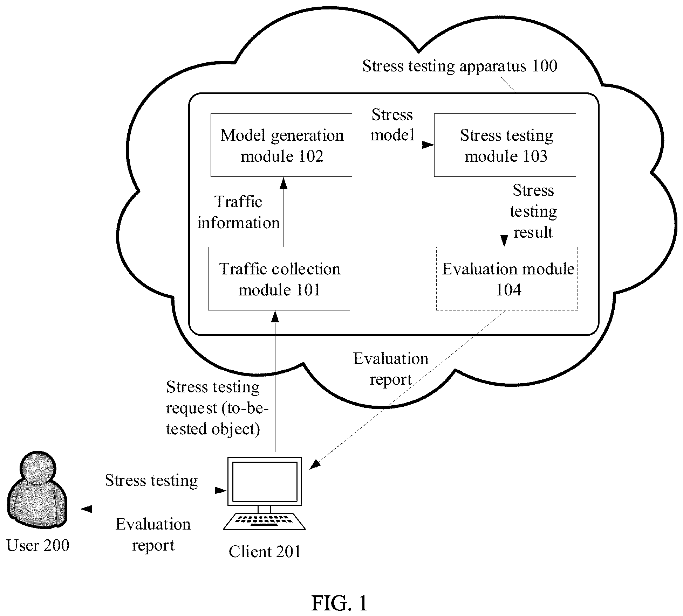

FIG. 1 is a diagram of a structure of a stress testing apparatus. As shown in FIG. 1, a stress testing apparatus 100 includes a traffic collection module 101, a model generation module 102, and a stress testing module 103. In addition, the stress testing apparatus 100 may further provide a client 201 for the outside, so that the client 201 is used to interact with a user 200 (for example, a designer).

The client 201 may be, for example, a web browser provided by the stress testing apparatus 100 for the outside; or the client 201 may be an application (application) running on a user terminal.

The user 200 may request, via the client 201, the stress testing apparatus 100 to perform stress testing on a to-be-tested object. The to-be-tested object may be, for example, a service (such as a facial recognition service) deployed on a network, or may be an object such as a system, a device, or a component connected to a network. Specific implementation of the to-be-tested object is not limited in this embodiment. During specific implementation, the user 200 may use the client 201 to generate a stress testing request for the to-be-tested object. The stress testing request includes indication information of the to-be-tested object, for example, an identifier of the to-be-tested object and an internet protocol (internet protocol, IP) address. Then, the client 201 may send the stress testing request to the stress testing apparatus 100, to request the stress testing apparatus 100 to perform stress testing on the to-be-tested object indicated in the request.

Generally, the stress testing apparatus 100 uses a stress model to simulate stress that the to-be-tested object bears in a normal running case, to test a response made by the to-be-tested object based on the stress model, thereby evaluating stress that the to-be-tested object is capable of bearing. In this case, if the stress model is manually constructed by a test person based on understanding of service logic of the to-be-tested object, stress simulated by the stress model is likely to be greatly different from stress that the to-be-tested object bears in an actual running process. For example, the stress simulated by the stress model is continuously sending a large quantity of application programming interface (application programming interface, API) requests of a type A to the to-be-tested object, but the to-be-tested object may receive a large quantity of API requests of a type B in an actual running process. In this way, after stress testing is performed on the to-be-tested object based on the manually constructed stress model, an obtained test result cannot reflect a stress resistance capability of the to-be-tested object for processing the API requests of the type B, affecting accuracy of stress testing on the to-be-tested object. In addition, a time consumed for manually constructing the stress model is usually long, and this also affects overall efficiency of stress testing.

Based on this, an embodiment of this application provides a stress testing method. After receiving the stress testing request sent by the client 201, the traffic collection module 101 obtains traffic information of the to-be-tested object based on the indication information that is of the to-be-tested object and that is carried in the stress testing request, and provides the traffic information of the to-be-tested object for the model generation module 102. The model generation module 102 generates, based on the traffic information of the to-be-tested object, a stress model matching a stress target, where the generated stress model includes at least one group of API request sequences, each group of API request sequences include at least one API request, and the stress target indicates an upper limit of stress that the to-be-tested object is capable of bearing; and provides the stress model for the stress testing module 103. The stress testing module 103 performs corresponding stress testing on the to-be-tested object based on the stress model.

Because the stress testing apparatus 100 can automatically generate the stress model based on the traffic information of the to-be-tested object, the stress model does not need to be manually generated by the test person based on understanding of service logic by the test person, thereby effectively reducing a technical level requirement for the test person. In addition, the automatically generated stress model matches the stress target, that is, test stress that can be generated by the automatically generated stress model can accord with stress corresponding to the stress target. In this way, a performance result obtained by performing stress testing by using the stress model is basically the same as actual performance of the to-be-tested object, so that impact of subjectivity and cognitive limitations of the test person on stress testing can be eliminated, thereby effectively improving accuracy of stress testing on the to-be-tested object.

Further, the stress testing apparatus 100 may further include an evaluation module 104, as shown in FIG. 1. The evaluation module 104 is configured to obtain a test result generated by the stress testing module 103, analyze and evaluate the test result, and generate an evaluation report, so that subsequently, it may be determined, based on the evaluation report, that the to-be-tested object passes stress testing, or if it is determined that the to-be-tested object does not pass stress testing, the to-be-tested object is maintained and developed.

It should be noted that a specific structure of the stress testing apparatus 100 shown in FIG. 1 is merely used as an implementation example. In another possible implementation, the stress testing apparatus 100 may further include more function modules, to support the stress testing apparatus in implementing more other functions. Alternatively, function division of the modules in the stress testing apparatus 100 is not limited to the example shown in FIG. 1. For example, a plurality of modules of the stress testing apparatus 100 may be combined into one module, or a module of the stress testing apparatus 100 may be split into a plurality of modules. In this embodiment, the specific structure of the stress testing apparatus is not limited to the example shown in FIG. 1.

In some examples, the stress testing apparatus 100 may be deployed in a cloud, and is configured to provide a cloud service of stress testing for the user. In this case, the stress testing apparatus 100 may be implemented, for example, by a computing device or a computing device cluster in the cloud. Alternatively, the stress testing apparatus 100 may be deployed locally, to provide a local stress testing service for the user.

In actual application, the stress testing apparatus 100 may be implemented by using software, or may be implemented by using hardware.

In an example in which the stress testing apparatus 100 is a software functional unit, the stress testing apparatus 100 may include code that is run on a computing instance. The computing instance may include at least one of a host, a virtual machine, and a container. Further, there may be one or more computing instances. For example, the stress testing apparatus 100 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

In an example in which the stress testing apparatus 100 is a hardware functional unit, the stress testing apparatus 100 may include at least one computing device, such as a server. Alternatively, the stress testing apparatus 100 may be a device implemented by using an application-specific integrated circuit (application-specific integrated circuit, ASIC) or a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), a data processing unit (data processing unit, DPU), or any combination thereof.

A plurality of computing devices included in the stress testing apparatus 100 may be distributed in a same region, or may be distributed in different regions. The plurality of computing devices included in the stress testing apparatus 100 may be distributed in a same AZ, or may be distributed in different AZs. Similarly, the plurality of computing devices included in the stress testing apparatus 100 may be distributed in a same VPC, or may be distributed in a plurality of VPCs. The plurality of computing devices may be any combination of computing devices such as a server, an ASIC, a PLD, a CPLD, an FPGA, and a GAL.

Then, various non-limiting specific implementations of a stress testing process are described in detail.

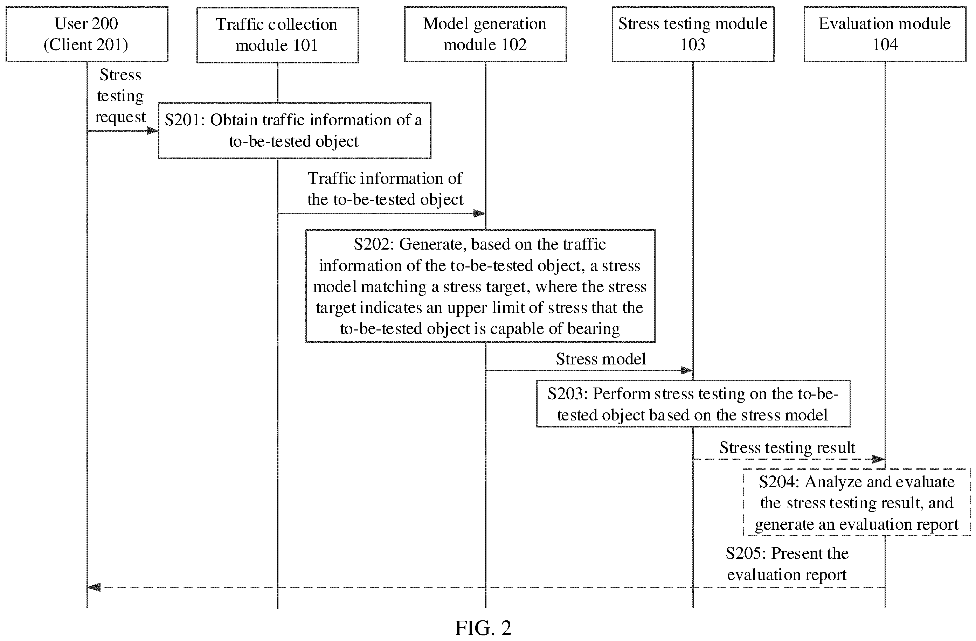

FIG. 2 is a schematic flowchart of a stress testing method according to an embodiment of this application. The method may be applied to the stress testing apparatus 100 shown in FIG. 1, or may be applied to another applicable stress testing apparatus. The following uses an example in which the method is applied to the stress testing apparatus 100 shown in FIG. 1 for description.

The stress testing method shown in FIG. 2 may specifically include the following steps.

S201: The traffic collection module 101 obtains traffic information of a to-be-tested object.

In this embodiment, the stress testing apparatus 100 may provide a cloud service or a localized service of stress testing for a user 200, so that after receiving a stress testing request sent by the user 200 via a client 201, the stress testing apparatus 100 may perform a stress testing process on the to-be-tested object. During specific implementation, the traffic collection module 101 in the stress testing apparatus 100 first obtains traffic information that represents a traffic status of the to-be-tested object in a time period. The traffic information may also represent a load status of the to-be-tested object in the time period. Generally, a traffic volume of the to-be-tested object is positively correlated with load of the to-be-tested object.

In a possible implementation, the traffic collection module 101 may extract the traffic information of the to-be-tested object from a log file of the to-be-tested object. In actual application, the to-be-tested object may continuously generate a log in a running process. The log may record an API request received and processed by the to-be-tested object in the running process. Therefore, the traffic collection module 101 may obtain a log file generated by the to-be-tested object in a time period, and clean the collected log file based on a time slice and a tenant identifier (such as a tenant ID or an IP address), to extract an API request received by the to-be-tested object from one or more tenants in the time slice, time information (such as a timestamp) of each API request, a tenant to which each API request belongs, and the like from the log file. The extracted API request and related information of the API request are traffic information of the to-be-tested object in the time slice.

In another possible implementation, the traffic collection module 101 may collect the traffic information of the to-be-tested object by using a traffic probe. During specific implementation, the traffic probe may be deployed in a running environment of the to-be-tested object in advance, so that in a running process of the to-be-tested object, the traffic collection module 101 may use the traffic probe to collect traffic generated by the to-be-tested object. In actual application, for different programming languages, different traffic probe technologies may be used to collect traffic of the to-be-tested object. For example, in a Java environment, a JVM-sandbox traffic probe technology is used; and in a Python environment, an aspect oriented programming (aspect oriented programming, AOP) technology is used.

The foregoing two implementations are merely used as some examples for description. In actual application, the traffic collection module 101 may alternatively use another manner to collect the traffic information of the to-be-tested object. This is not limited in this embodiment.

After obtaining the traffic information, the traffic collection module 101 may provide the traffic information for the model generation module 102.

S202: The model generation module 102 generates, based on the traffic information of the to-be-tested object, a stress model matching a stress target, where the stress model includes at least one group of API request sequences, each group of API request sequences include at least one API request, and the stress target indicates an upper limit of stress that the to-be-tested object is capable of bearing.

In this embodiment, the model generation module 102 can automatically generate the stress model based on the traffic information of the to-be-tested object, so that the stress model does not need to be manually constructed by a test person.

In an implementation example, the model generation module 102 may first analyze the traffic information of the to-be-tested object, and then automatically generate the stress model based on a traffic analysis result. Specifically, the model generation module 102 may determine a plurality of API requests in the traffic information of the to-be-tested object, and perform sequence modeling based on time information of each API request. Modeled sequences include a complex API request sequence, a parallel API request sequence, and a serial API request sequence. Some API requests in the complex API request sequence may form a parallel API request sequence or a serial API request sequence. The parallel API request sequence includes a plurality of API requests with same or similar time information (for example, it may be considered that the plurality of API requests occur at a same moment). The serial API request sequence includes a plurality of API requests with consecutive time information (that is, it may be considered that the plurality of API requests occur in a specific chronological order or the like).

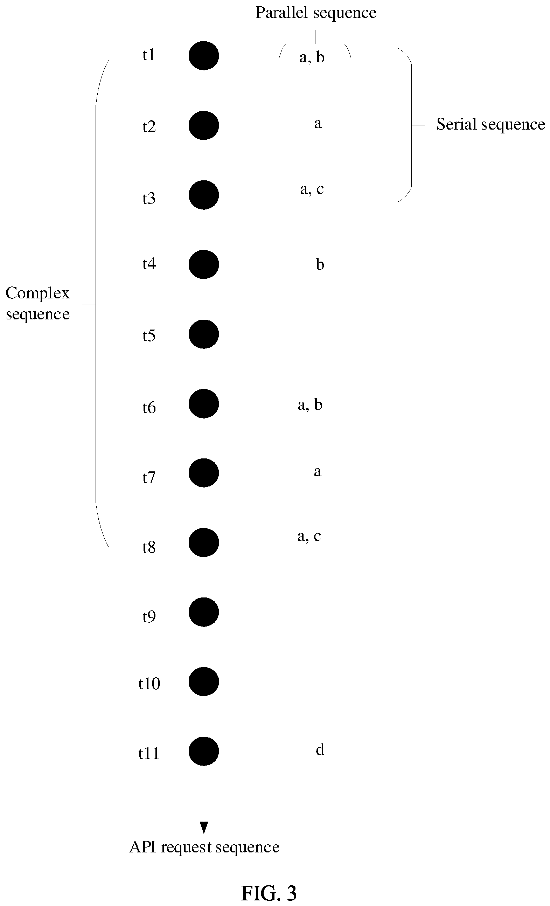

For example, it is assumed that the traffic information of the to-be-tested object includes a plurality of API requests in a time period from t1 to t11 shown in FIG. 3, where a, b, c, and d are API requests belonging to different tenants. In this case, after sequence modeling is performed on the plurality of API requests of the to-be-tested object, a complex API request sequence {{a, c}, {a}, {a, b}, {b}, {a, c}, {a}, {a, b}} may be obtained, where a parallel API request sequence includes {{a}, {c}}, {{a}, {b}}, and the like, and a serial sequence includes { {a, c}, {a}, {a, b}}, and the like.

Then, the model generation module 102 may analyze the complex API request sequence, the parallel API request sequence, and the serial API request sequence, and determine relationships such as dependency, a time sequence, and a cycle between different APIs in each API request sequence. For example, in the parallel API request sequences {{a}, {c}} and {{a}, {b}}, there is a data dependency relationship between the API request a and the API request c, that is, the API request c depends on the API request a for execution, and similarly, the API request b depends on the API request a for execution. In the serial sequence including {{a, c}, {a}, {a, b}}, there is a time sequence relationship between the API request b and the API request a, that is, the API request b needs to be executed after the API request a is executed, and so on.

For example, the model generation module 102 may mine a relationship between different API requests by using a frequent sequential pattern mining algorithm and with reference to an API request knowledge graph. The frequent sequential pattern mining algorithm may be, for example, at least one of a generalized sequential pattern (generalized sequential pattern, GSP) algorithm, a sequential pattern discovery using equivalence classes (sequential pattern discovery using equivalence classes, SPADE) algorithm, a FreeSpan algorithm, and a PrefixSpan algorithm, or may be an algorithm of another type. The API request knowledge graph may be constructed by a skilled person in advance to define a relationship between different API requests in different service scenarios. Further, an API request sequence with a repetition cycle or the like may be further mined.

Then, the model generation module 102 may determine, based on the API request knowledge graph, a service scenario to which each group of API request sequences belong. The service scenario may be configured, for example, based on a service type that the to-be-tested object can provide. For example, the service scenario may include a load balancer as a service (load balancer as a service, LBaaS), an elastic computing service (elastic computing service, ECS), or a virtual private cloud (virtual private cloud, VPC), or may be a service scenario of another type. This is not limited in this embodiment.

After determining at least one group of API request sequences corresponding to each service scenario, the model generation module 102 may calculate, by using a service scenario as a unit, a value of an attribute of the service scenario based on the API request sequences in each service scenario. The attribute of the service scenario may be an abnormal peak value of at least one indicator that belongs to the service scenario. The indicator may be, for example, requests per second (requests per second, RPS) or transactions per second (transactions per second, TPS). For example, the model generation module 102 may calculate time-based distribution of a plurality of API requests that belong to the service scenario, to calculate abnormal peak values of indicators such as the RPS and the TPS of the service scenario based on the distribution of the plurality of API requests. Alternatively, the attribute of the service scenario may be a proportion of an API request that belongs to the service scenario in all API requests in a unit time (that is, API requests in a plurality of service scenarios in the unit time). Alternatively, the attribute of the service scenario may be a proportion of an API request sequence that belongs to the service scenario in all API request sequences. Alternatively, the attribute of the service scenario may be a call rule of the API request that belongs to the service scenario. For example, before the API request a is called, the API request b needs to be called first. Alternatively, the attribute of the service scenario may be a cycle of the API request that belongs to the service scenario. Alternatively, the attribute of the service scenario may be an execution mode of the API request that belongs to the service scenario, including a serial execution mode, a parallel execution mode, and the like. In actual application, the attribute of the service scenario may alternatively be attribute information of another type. This is not limited in this embodiment.

It may be understood that the value of the attribute of each service scenario calculated based on the collected traffic information of the to-be-tested object can reflect actual running stress of the to-be-tested object in a time period, and in most cases, the actual running stress of the to-be-tested object in the time period may be less than stress that needs to be constructed to test the to-be-tested object (that is, if stress testing is performed on the to-be-tested object based on actual running stress of the to-be-tested object in a time period, it is difficult to test the upper limit of stress that the to-be-tested object is capable of bearing). Therefore, the model generation module 102 may configure, based on the value of the attribute of each service scenario, stress of the stress model that needs to be automatically generated. For example, test stress may be set to a stress value greater than the actual running stress.

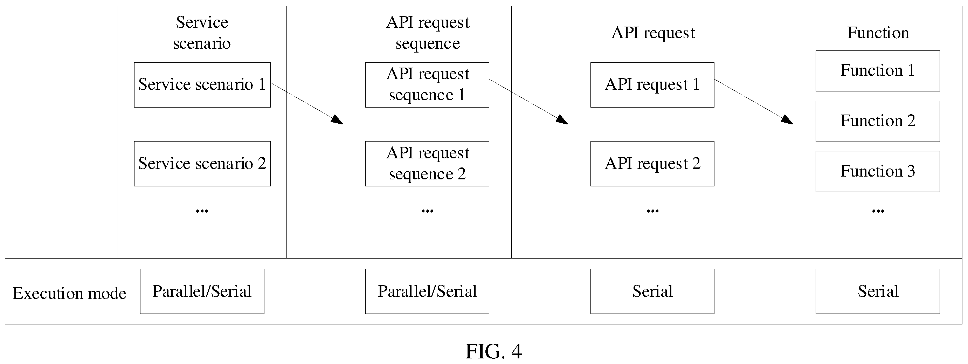

For example, the model generation module 102 may present the value of the attribute of each service scenario to the user 200, to provide reference for the user 200 when the user sets, for the stress model that needs to be generated, test stress that can be generated by the stress model. During specific implementation, the model generation module 102 may generate a configuration window. The configuration window presents the attribute of the service scenario corresponding to the stress model to the user 200. Therefore, the model generation module 102 may send the configuration window to the client 201, so that the configuration window is presented to the user 200 on the client 201. Then, the user 200 may configure, on the client 201 based on the attribute of each service scenario presented in the configuration window, stress of the stress model that needs to be generated. For example, the user 200 may adjust, on the client 201, a proportion of API request sequences in some service scenarios in all API request sequences based on the stress target that is set during stress testing, for example, may increase API request sequences in some service scenarios; or the user 200 may increase an abnormal peak value of at least one indicator in some service scenarios, for example, increase an abnormal peak value of an RPS indicator in a service scenario A. For another example, the user 200 may directly configure the stress target in the configuration window, so that the model generation module 102 may automatically adjust a quantity, a proportion, and the like of API request sequences in each service scenario based on the stress target. The stress target may indicate the upper limit of stress that the to-be-tested object is capable of bearing. In addition, the stress target may include a plurality of types of sub-targets. The different types of sub-targets may indicate upper limits of different types of stress that the to-be-tested object is capable of bearing, for example, an upper limit of occupied bandwidth, an upper limit of consumed storage resources, and an upper limit of a round trip time (round trip time, RTT). In this way, based on a configuration operation performed by the user 200, an initial stress model may be generated by adjusting an API request sequence (including an API request), and stress that can be generated by the initial stress model can accord with test stress corresponding to the stress target. For example, an API request sequence in the generated initial stress model may have a topology structure shown in FIG. 4.

In this embodiment, the stress testing apparatus 100 may directly use the initial stress model as a model used to perform stress testing on the to-be-tested object. In a further possible implementation, the model generation module 102 may further perform model mutation on the initial stress model, to generate one or more other stress models that have a same or similar stress target as the initial stress model. API request sequences and API requests included in different stress models are different in terms of quantities, time sequences, and the like.

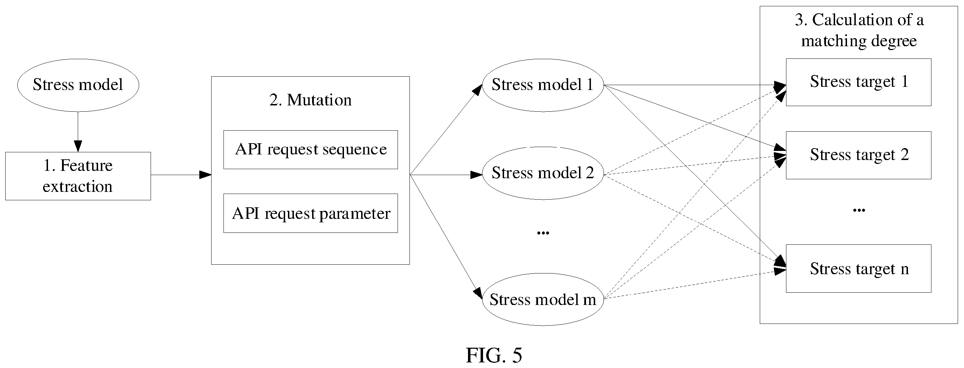

In a possible implementation, the model generation module 102 may extract a feature vector of the initial stress model based on a predefined feature vector model of a general stress model, as shown in FIG. 5. For example, the feature vector model may be, for example, {round trip time, occupied bandwidth, data volume, computing, memory, storage, virtual user minute, queries per second, transactions per second, ...}. The round trip time (RTT) is a total latency from a time point at which a transmit end sends an API request to a time point at which the transmit end receives an acknowledgment from the to-be-tested object (the to-be-tested object immediately sends the acknowledgment after receiving the API request). The occupied bandwidth is bandwidth that needs to be occupied by the to-be-tested object to receive and process an API request. The data volume is an amount of data that can be processed by the to-be-tested object. The computing, the memory, and the storage are respectively computing resources, memory resources, and storage resources that can be consumed by the to-be-tested object in a running process. The virtual user minute (virtual user minute, VUM) is a total quantity of simulated users/tenants per minute. The queries per second (queries per second, QPS) is a quantity of queries that can be provided by the to-be-tested object per second. The transactions per second (transactions per second, TPS) is a quantity of transactions that can be processed by the to-be-tested object per second. In actual application, the model generation module 102 may calculate feature values in the foregoing dimensions based on the API request sequence in the initial stress model, to extract feature vectors of the initial stress model. Correspondingly, the stress target may be specifically a parameter indicator of one or more types of the to-be-tested object, such as the round trip time, the occupied bandwidth, the data volume, computing consumption, memory consumption, storage consumption, the virtual user minute, the queries per second, and the transactions per second.

Then, after extracting the feature vector of the initial stress model based on the feature vector model, the model generation module 102 may mutate the API request sequence in the initial stress model or a parameter in an API request, to generate a plurality of stress models, as shown in FIG. 5. For example, the model generation module 102 may mutate the API request sequence or the parameter in the API request by using a genetic algorithm (genetic algorithm, GA); or the model generation module 102 may mutate the API request sequence in the initial stress model or the parameter in the API request based on a deep reinforcement learning algorithm and an action-reward (action-reward) mechanism.

When mutating the API request sequence, the model generation module 102 may specifically insert an API request into the API request sequence, or replace or delete some API requests in the API request sequence. When mutating a parameter in an API request, the model generation module 102 may adjust, based on a resource used by the to-be-tested object, a parameter that is related to the resource and that is in the API request. For example, a request manner may be defined in the API request, including "GET" (used to request data), "POST" (used to send data), or the like, so that the model generation module 102 may adjust, based on bandwidth resources of the to-be-tested object, request manner parameters in some API requests to "POST" or the like (to increase stress in bandwidth that needs to be occupied by the to-be-tested object to receive the API requests).

Further, the model generation module 102 may further mutate the API request sequence based on a service scenario to which the API sequence belongs and by using the service scenario as a granularity. For example, the model generation module 102 may adjust an order of API request sequences that belong to different service scenarios, or delete all API request sequences in some service scenarios (a quantity of API request sequences in another service scenario may be accordingly increased). For another example, for each service scenario, the model generation module 102 may adjust an order of a plurality of API request sequences in the service scenario, or add a new API request sequence to the plurality of API request sequences in the service scenario, replace some API request sequences, delete some API request sequences, or the like.

After automatic mutation is performed on the initial stress model, not all of the plurality of generated different stress models match the stress target (the stress target may be configured by the user 200). Therefore, the model generation module 102 may select, from the plurality of stress models, a stress model in which a matching degree between generated test stress and the stress target is greater than a threshold. During specific implementation, for each stress model obtained through mutation, the model generation module 102 may calculate, based on an API request sequence in the stress model, test stress generated by the stress model, and calculate a matching degree between the test stress and the stress target. For example, test stress that is in occupied bandwidth and that is generated by the stress model is 98 megabits per second, and the stress target is occupying a bandwidth of 100 megabits per second. In this case, a matching degree between the test stress and the stress target may be 98% (that is, 98 megabits per second/100 megabits per second). In this way, the model generation module 102 may calculate a matching degree between test stress generated by each stress model and the stress target, so that a stress model whose matching degree is greater than the threshold (for example, 90%) may be selected from the plurality of stress models.

It should be noted that the stress target may include a plurality of types of sub-targets. The different types of sub-targets may indicate upper limits of different types of stress that the to-be-tested object is capable of bearing. In this case, the matching degree between the test stress generated by the stress model and the stress target may be an average value, a weighted value, or the like of matching degrees between the test stress generated by the stress model and all sub-targets. A manner of calculating the matching degree between the test stress and the stress target is not limited in this embodiment.

In an actual application scenario, there may be a large difference between matching degrees between test stress generated by different stress models and different stress targets. For example, a matching degree between test stress generated by a stress model A and a stress target a is high, and a matching degree between the test stress generated by the stress model A and a stress target b is low; and a matching degree between test stress generated by a stress model B and the stress target b is high, and a matching degree between the test stress generated by the stress model B and the stress target a is low. Therefore, after obtaining the plurality of different stress models through mutation, the model generation module 102 may calculate matching degrees between the stress generated by each stress model and different stress targets, to select a stress model matching each stress target, as shown in FIG. 5.

After selecting the stress model matching each stress target, the model generation module 102 may further determine whether to end the model mutation process. If the model mutation process is not to be ended, the model generation module 102 continues to perform the model mutation process in the foregoing manner. For example, an API request sequence or a parameter in an API request in a mutated stress model may be mutated, to generate more other stress models. For example, a termination condition for determining to end the model mutation process may be that a quantity of mutation times reaches an upper limit, a maximum matching degree between test stress generated by a stress model and a stress target reaches a preset value, or an instruction for ending mutation is received. This is not limited in this embodiment.

In the foregoing implementation, the model generation module 102 may generate a mutated stress model based on a manually configured stress target. In another possible implementation, the model generation module 102 may alternatively perform reinforcement learning on a model mutation process and a model selection process based on a reinforcement learning algorithm. In this way, an API request sequence or a parameter in an API request can automatically mutate and converge toward an optimal direction (that is, a direction in which a reward value is positive), so that manual intervention may not be required (that is, a stress target, a matching degree threshold, and the like do not need to be manually provided), and a problem of a curse of dimensionality of representing huge state space and action space in reinforcement learning can be resolved by using a neural network of deep learning.

After generating the stress model matching the stress target, the model generation module 102 may provide the stress model for the stress testing module 103.

S203: The stress testing module 103 performs stress testing on the to-be-tested object based on the stress model matching the stress target.

In an implementation example, the stress testing module 103 may generate a corresponding stress testing script based on the stress model, for example, may generate a script in a format of ".jmx". In an actual application scenario, when a stress testing script is generated, adaptation may be performed based on a stress testing engine. Then, the stress testing module 103 may deploy the stress testing script. For example, a MapReduce-like manner may be used, to allocate stress tasks in which there is a dependency relationship between APIs to a same execution machine, and allocate stress tasks in which there is no dependency relationship to different execution machines for parallel execution. The execution machine is a stress-exerting target machine that can provide performance data of the execution machine in the stress testing process, and may be, for example, a server that can communicate with the to-be-tested object. Then, the stress testing module 103 may collect a response result obtained when each execution machine completes stress testing on the to-be-tested object, and perform reduction (reduction) on collected response results, that is, summarize all response results and sort out the summarized response results, to generate a final stress testing result.

In an actual application scenario, the stress testing module 103 may perform stress testing processes on the to-be-tested object by using a plurality of stress models respectively, to obtain a stress testing result corresponding to each stress model. Because the plurality of stress models are automatically generated by the model generation module 102 through model mutation, the plurality of stress models may cover a plurality of service scenarios of the to-be-tested object during actual running. Compared with a manner of manually constructing a stress model, this may effectively improve coverage of a service scenario of the to-be-tested object, thereby improving accuracy of stress testing.

Further, after completing stress testing on the to-be-tested object, the stress testing module 103 may evaluate the stress testing result, to convert the stress testing result into information that can be directly understood by the user 20, so that the user 200 learns of a stress resistance capability of the to-be-tested object. Therefore, this embodiment may further include the following steps.

S204: The evaluation module 104 analyzes and evaluates a stress testing result, and generates an evaluation report.

The evaluation report generated by the evaluation module 104 can be used to evaluate the stress resistance capability of the to-be-tested object.

S205: The evaluation module 104 presents the evaluation report to the user 200 via the client 201.

In this way, when determining, based on the evaluation report, that the to-be-tested object does not pass stress testing, the user 200 may further optimize the to-be-tested object by performing problem analysis and maintenance development on the to-be-tested object.

In the embodiments shown in FIG. 1 and FIG. 2, the stress testing apparatus 100 (including the traffic collection module 101, the model generation module 102, and the stress testing module 103) used in the stress testing process may be software configured on a computing device or a computing device cluster. In addition, the software is run on the computing device or the computing device cluster, so that the computing device or the computing device cluster may implement a function of the stress testing apparatus 100. The following describes in detail, from a perspective of hardware device implementation, the stress testing apparatus 100 used in the stress testing process.

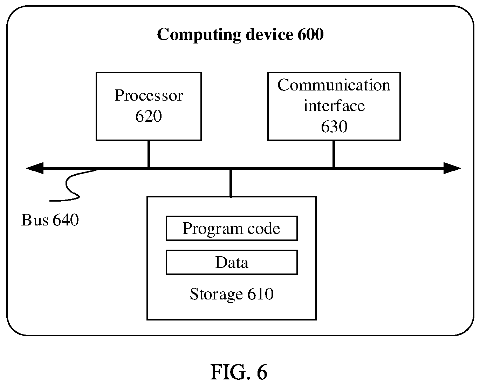

FIG. 6 shows a diagram of a structure of a computing device. The stress testing apparatus 100 may be deployed on the computing device. The computing device may be a computing device (for example, a server) in a cloud environment, a computing device in an edge environment, a terminal device, or the like.

As shown in FIG. 6, a computing device 600 includes a processor 610, a storage 620, a communication interface 630, and a bus 640. The processor 610, the storage 620, and the communication interface 630 communicate with each other through the bus 640. The bus 640 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by only one bold line in FIG. 6. However, it does not indicate that there is only one bus or only one type of bus. The communication interface 630 is configured to communicate with the outside, for example, receive recorded traffic of a to-be-tested object.

The processor 610 may be a central processing unit (central processing unit, CPU), an application-specific integrated circuit (application-specific integrated circuit, ASIC), a graphics processing unit (graphics processing unit, GPU), or one or more integrated circuits. The processor 610 may alternatively be an integrated circuit chip, and has a signal processing capability. In an implementation process, functions of the modules in the stress testing apparatus may be completed by using an integrated logic circuit of hardware in the processor 610 or by using instructions in a form of software. The processor 610 may alternatively be a general-purpose processor, a data signal processor (digital signal processor, DSP), a field programmable gate array (field programmable gate array, FPGA) or another programmable logic device, a discrete gate or a transistor logic device, or a discrete hardware component, and may implement or perform methods, steps, and logical block diagrams disclosed in embodiments of this application. The general-purpose processor may be a microprocessor, or the processor may be any conventional processor, or the like. The method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the storage 620. The processor 610 reads information in the storage 620, and completes some or all functions of the stress testing apparatus in combination with hardware of the processor 610.

The storage 620 may include a volatile memory (volatile memory), for example, a random access memory (random access memory, RAM). The storage 620 may further include a non-volatile memory (non-volatile memory), for example, a read-only memory (read-only memory, ROM), a flash memory, an HDD, or an SSD.

The storage 620 stores executable code, and the processor 610 executes the executable code to perform the method performed by the stress testing apparatus 100.

Specifically, when the embodiment shown in FIG. 2 is implemented, and the traffic collection module 101, the model generation module 102, and the stress testing module 103 (and the evaluation module 104) described in the embodiment shown in FIG. 2 are implemented by using software, software or program code required for performing functions of the traffic collection module 101, the model generation module 102, and the stress testing module 103 (and the evaluation module 104) in FIG. 2 is stored in the storage 620, interaction between the traffic collection module 101 and another device is implemented by using the communication interface 630, and the processor is configured to execute instructions in the storage 620, to implement the method performed by the stress testing apparatus 100.

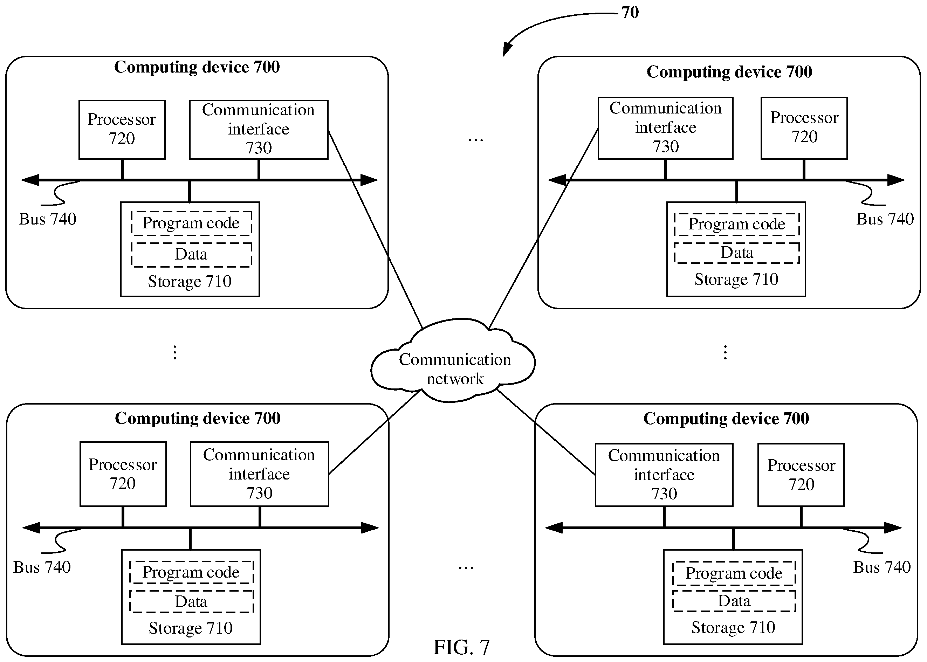

FIG. 7 shows a diagram of a structure of a computing device cluster. A computing device cluster 70 shown in FIG. 7 includes a plurality of computing devices, and the foregoing stress testing apparatus 100 may be deployed on the plurality of computing devices in the computing device cluster 70 in a distributed manner. As shown in FIG. 7, the computing device cluster 70 includes a plurality of computing devices 700, and each computing device 700 includes a storage 720, a processor 710, a communication interface 730, and a bus 740. The storage 720, the processor 710, and the communication interface 730 implement a communication connection to each other through the bus 740.

The processor 710 may be a CPU, a GPU, an ASIC, or one or more integrated circuits. The processor 710 may alternatively be an integrated circuit chip, and has a signal processing capability. In an implementation process, some functions of the stress testing apparatus may be completed by using an integrated logic circuit of hardware in the processor 710 or by using instructions in a form of software. The processor 710 may alternatively be a DSP, an FPGA, a general-purpose processor, another programmable logic device, a discrete gate or a transistor logic device, or a discrete hardware component, and may implement or perform some methods, steps, and logical block diagrams disclosed in embodiments of this application. The general-purpose processor may be a microprocessor, or the processor may be any conventional processor, or the like. Steps of the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the storage 720. In each computing device 700, the processor 710 reads information in the storage 720, and may complete some functions of the stress testing apparatus in combination with hardware of the processor 710.

The storage 720 may include a ROM, a RAM, a static storage device, a dynamic storage device, a hard disk (for example, an SSD or an HDD), and the like. The storage 720 may store program code, for example, a part or all of program code used to implement the traffic collection module 101, a part or all of program code used to implement the model generation module 102, and a part or all of program code used to implement the stress testing module 103 (and a part or all of program code used to implement the evaluation module 104). For each computing device 700, when the program code stored in the storage 720 is executed by the processor 710, the processor 710 performs, based on the communication interface 730, some methods performed by the stress testing apparatus 100. For example, a part of the computing devices 700 may be configured to perform the method performed by the traffic collection module 101, another part of the computing devices 700 are configured to perform the method performed by the model generation module 102, and still another part of the computing devices 700 are configured to perform the method performed by the stress testing module 103. The storage 720 may further store data, for example, intermediate data or result data generated by the processor 710 in an execution process, for example, the foregoing initial stress model or the stress model matching the stress target.

The communication interface 703 in each computing device 700 is configured to communicate with the outside, for example, interact with another computing device 700.

The bus 740 may be a peripheral component interconnect bus, an extended industry standard architecture bus, or the like. For ease of indication, the bus 740 in each computing device 700 is indicated by only one bold line in FIG. 7. However, it does not indicate that there is only one bus or only one type of bus.

A communication path is established between the plurality of computing devices 700 via a communication network, to implement functions of the stress testing apparatus 100. Any one of the computing devices may be a computing device (for example, a server) in a cloud environment, a computing device in an edge environment, or a terminal device.

In addition, an embodiment of this application further provides a computer-readable storage medium. The computer-readable storage medium stores instructions. When the instructions are run on one or more computing devices, the one or more computing devices are enabled to perform the methods performed by the modules of the stress testing apparatus 100 in the foregoing embodiments.

In addition, an embodiment of this application further provides a computer program product. When the computer program product is executed by one or more computing devices, the one or more computing devices perform any one of methods in the foregoing stress testing method. The computer program product may be a software installation package. When any one of the methods in the foregoing stress testing method needs to be applied, the computer program product may be downloaded and executed on a computer.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated storage, a dedicated component, and the like. Generally, any function that can be performed by a computer program can be easily implemented by using corresponding hardware. Moreover, a specific hardware structure used to implement a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A stress testing method, wherein the method comprises:
obtaining traffic information of a to-be-tested object;
generating, based on the traffic information of the to-be-tested object, a stress model matching a stress target, wherein the stress model comprises at least one group of application programming interface API request sequences, each group of API request sequences comprise at least one API request, and the stress target indicates an upper limit of stress that the to-be-tested object is capable of bearing; and
performing stress testing on the to-be-tested object based on the stress model.

2. The method according to claim 1, wherein generating, based on the traffic information of the to-be-tested object, the stress model matching the stress target comprises:
generating an initial stress model based on the traffic information of the to-be-tested object, wherein the initial stress model comprises at least one group of API request sequences, and each group of API request sequences in the initial stress model comprise at least one API request;
mutating an API request sequence in the initial stress model or a parameter in an API request, to generate a plurality of stress models; and
selecting, from the plurality of stress models, a stress model in which a matching degree between generated test stress and the stress target is greater than a threshold.

3. The method according to claim 1, wherein generating, based on the traffic information of the to-be-tested object, the stress model matching the stress target comprises:
extracting the at least one group of API request sequences from the traffic information of the to-be-tested object;
determining an attribute of at least one service scenario based on the at least one group of API request sequences;
generating a configuration window, wherein the configuration window presents the attribute of the at least one service scenario to a user; and
adjusting the at least one group of API request sequences based on a configuration operation that is performed by the user on the configuration window for the attribute of the at least one service scenario, to obtain the stress model matching the stress target.

4. The method according to claim 3, wherein the attribute of the service scenario comprises one or more pieces of the following information:
an abnormal peak value of at least one indicator that belongs to the service scenario, a proportion of an API request that belongs to the service scenario in all API requests in a unit time, a proportion of an API request sequence that belongs to the service scenario in all API request sequences, a call rule of the API request that belongs to the service scenario, a cycle of the API request that belongs to the service scenario, and an execution mode of the API request that belongs to the service scenario.

5. The method according to claim 3 or 4, wherein the method further comprises:
analyzing the traffic information of the to-be-tested object, to obtain an API request comprised in each of the at least one service scenario; and
obtaining an attribute of each service scenario through calculation based on the API request comprised in each service scenario.

6. The method according to claim 2, wherein mutating the API request sequence in the initial stress model or the parameter in the API request comprises:
mutating the API request sequence in the initial stress model or the parameter in the API request by using a genetic algorithm or a deep reinforcement learning algorithm.

7. The method according to any one of claims 1 to 6, wherein the stress target comprises a plurality of types of sub-targets, and different types of sub-targets indicate upper limits of different types of stress that the to-be-tested object is capable of bearing.

8. The method according to any one of claims 1 to 7, wherein obtaining the traffic information of the to-be-tested object comprises:
extracting the traffic information of the to-be-tested object from a log file of the to-be-tested object; or
collecting the traffic information of the to-be-tested object by using a traffic probe, wherein the traffic probe is deployed in a running environment of the to-be-tested object.

9. A stress testing apparatus, wherein the apparatus comprises:
a traffic collection module, configured to obtain traffic information of a to-be-tested object;
a model generation module, configured to generate, based on the traffic information of the to-be-tested object, a stress model matching a stress target, wherein the stress model comprises at least one group of application programming interface API request sequences, each group of API request sequences comprise at least one API request, and the stress target indicates an upper limit of stress that the to-be-tested object is capable of bearing; and
a stress testing module, configured to perform stress testing on the to-be-tested object based on the stress model.

10. The apparatus according to claim 9, wherein the model generation module is configured to:
generate an initial stress model based on the traffic information of the to-be-tested object, wherein the initial stress model comprises at least one group of API request sequences, and each group of API request sequences in the initial stress model comprise at least one API request;
mutate an API request sequence in the initial stress model or a parameter in an API request, to generate a plurality of stress models; and
select, from the plurality of stress models, a stress model in which a matching degree between generated test stress and the stress target is greater than a threshold.

11. The apparatus according to claim 9, wherein the model generation module is configured to:
extract the at least one group of API request sequences from the traffic information of the to-be-tested object;
determine an attribute of at least one service scenario based on the at least one group of API request sequences;
generate a configuration window, wherein the configuration window presents the attribute of the at least one service scenario to a user; and
adjust the at least one group of API request sequences based on a configuration operation that is performed by the user on the configuration window for the attribute of the at least one service scenario, to obtain the stress model matching the stress target.

12. The apparatus according to claim 11, wherein the attribute of the service scenario comprises one or more pieces of the following information:
an abnormal peak value of at least one indicator that belongs to the service scenario, a proportion of an API request that belongs to the service scenario in all API requests in a unit time, a proportion of an API request sequence that belongs to the service scenario in all API request sequences, a call rule of the API request that belongs to the service scenario, a cycle of the API request that belongs to the service scenario, and an execution mode of the API request that belongs to the service scenario.

13. The apparatus according to claim 11 or 12, wherein the model generation module is further configured to:
analyze the traffic information of the to-be-tested object, to obtain an API request comprised in each of the at least one service scenario; and
obtain an attribute of each service scenario through calculation based on the API request comprised in each service scenario.

14. The apparatus according to claim 10, wherein the model generation module is configured to mutate the API request sequence in the initial stress model or the parameter in the API request by using a genetic algorithm or a deep reinforcement learning algorithm.

15. The apparatus according to any one of claims 9 to 14, wherein the stress target comprises a plurality of types of sub-targets, and different types of sub-targets indicate upper limits of different types of stress that the to-be-tested object is capable of bearing.

16. The apparatus according to any one of claims 9 to 15, wherein the traffic collection module is configured to:
extract the traffic information of the to-be-tested object from a log file of the to-be-tested object; or
collect the traffic information of the to-be-tested object by using a traffic probe, wherein the traffic probe is deployed in a running environment of the to-be-tested object.

17. A computing device cluster, comprising at least one computing device, wherein each computing device comprises a processor and a storage; and
the processor is configured to execute instructions stored in the storage, so that the computing device cluster performs the method according to any one of claims 1 to 8.

18. A computer-readable storage medium, wherein the computer-readable storage medium stores instructions, and when the instructions are run on at least one computing device, the at least one computing device is enabled to perform the method according to any one of claims 1 to 8.
